# EUROPÄISCHE PATENTSCHRIFT

(11) **EP 3 667 242 B1**
(45) Veröffentlichungstag und Bekanntmachung des Hinweises auf die Patenterteilung: **14.06.2023**
(21) Anmeldenummer: 19213380.9
(22) Anmeldetag: 04.12.2019
(51) Int. Cl.: G01D 4/00, G01D 21/00, G01D 9/00, H04Q 9/00, H04W 4/38, H04W 56/00

(54) **VERFAHREN ZUM SAMMELN VON DATEN, SENSOR SOWIE VERSORGUNGSNETZ**
METHOD FOR COLLECTING DATA, SENSOR AND SUPPLY NETWORK
PROCÉDÉ DE COLLECTE DE DONNÉES, CAPTEUR AINSI QUE RÉSEAU D'ALIMENTATION

(30) Priorität: 14.12.2018 DE 102018009822
(43) Veröffentlichungstag der Anmeldung: 17.06.2020
(73) Patentinhaber: Diehl Metering Systems GmbH, 90451 Nürnberg (DE); DIEHL METERING SAS, 68304 Saint Louis (FR)
(72) Erfinder: Joppich-Dohlus, Petra, 91080 Rathsberg (DE); Kauppert, Thomas, 90455 Nürnberg (DE); Schmidt, Achim, 91367 Weißenohe (DE); Schmitz, Stefan, 90455 Nürnberg (DE); Sosna, Christoph, 90429 Nürnberg (DE); Bach, Guy, 68640 Waldighofen (FR); Breton, Aster, 05350 Saint Véran (FR); Gottschalk, Klaus, 90610 Winkelhaid (DE)
(74) Vertreter: Diehl Patentabteilung

(56) Entgegenhaltungen:
- WO-A1-2017/004182
- US-A1- 2013 285 834
- US-A1- 2015 230 006
- US-A1- 2015 345 986

## Beschreibung

Die vorliegende Erfindung betrifft zum einen ein Verfahren zum Sammeln von Daten gemäß dem Oberbegriff des Anspruchs 1 sowie zum anderen einen Sensor gemäß dem Oberbegriff des Anspruchs 16 bzw. ein Versorgungsnetz zur Verteilung eines Verbrauchsmediums gemäß dem Oberbegriff des Anspruchs 17.

### Technologischer Hintergrund

Verbrauchszähler sind Bestandteil von Versorgungsnetzen zur Verteilung von Verbrauchsgütern, wie z.B. Gas, Wasser, Wärme oder Elektrizität, und dienen dazu Verbrauchsdaten zu generieren. Verbrauchsdaten werden auf der Basis von von einem Messelement eines Sensors gelieferten Rohmessdaten von einem zählerseitigen Mikroprozessor errechnet und über ein drahtgebundenes Kommunikationssystem in Form eines BUS-Systems, insbesondere eines sogenannten M-BUS-Systems an eine zentrale Datenverwaltung (Head-End-System) weitergeleitet. Bei den Daten handelt es sich vor allem um den aktuellen Verbrauch, d.h. den Zählerstand.

Hierbei werden Rohmessdaten von dem Messelement eines Sensors des Verbrauchszählers zu vorbestimmten vorgegebenen Zeitpunkten generiert, von einem Mikroprozessor des Verbrauchszählers ausgewertet d. h. in Verbrauchsdaten umgerechnet und die daraus resultierenden Verbrauchsdaten anschließend über eine drahtgebundene primäre Kommunikationsstrecke von einer Lese- bzw. Empfangseinrichtung (M-BUS-Master bzw. Konzentrator) zu festgelegten Zeitpunkten an den einzelnen lokal angeordneten Verbrauchszähler abgefragt. Anschließend werden die Verbrauchsdaten von der Lese- bzw. Empfangseinrichtung über eine tertiäre Kommunikationsstrecke, beispielsweise auf Basis von LAN, GPRS, 3G, LTE, weiter zu einem Head-End-System übertragen. Die Verbrauchsdaten können dann im Head-End angezeigt oder zur Rechnungsstellung verwendet werden. Die bisherige Konzeption der Verbrauchsdatenerfassung ist sowohl in ihrer Informationstiefe als auch in ihrem Informationsumfang begrenzt.

Die US 2013/285834 A1 betrifft ein Verfahren zum Erhalt von genauen, momentanen elektrischen Verbrauchsdaten für Telemetrie Zwecke. Die Daten sollen innerhalb einiger weniger Sekunden mit hoher Auflösung übertragen werden. Pulse werden zusammen mit einem Zeitstempel übertragen, wobei der jeweiligen Puls-bezogene Zeitstempel an dem nachziehenden Ende des jeweiligen Pulses erzeugt wird. Die Übertragung der mit Zeitstempel versehenen Pulse soll permanent in einem fest vorgegebenen Zeitraster von wenigen Sekunden erfolgen.

Aus der US 2015/0230006 A1 ist eine Kommunikationsstruktur bekannt, bei der eine Mehrzahl von als Zähler ausgebildeter Slaves über einen Master mit einem Hostserver kommunizieren. Der elektrische Stromverbrauch wird unmittelbar im Stromzähler errechnet und über den Master an den Hostserver übertragen.

Die US 2015/345986 A1 offenbart einen ebenfalls als Slave konzipierten Energiezähler, dessen Daten über einen Master an einen Server übertragen werden. Auch hierbei werden bereits im Energiezähler die dort erfassten Messwerte in Daten der elektrischen Energie umgerechnet und an den Master übertragen.

Die WO 2017/004182 A1 betrifft ein System zur Spannungsmessung und drahtlosen Übertragung für den Einsatz in einem Elektrizitätsversorgungsnetz. Das System umfasst einen Spannungsteiler, welcher mit einer Testvorrichtung verbunden ist und dazu hergerichtet ist, Spannungssignale von der Testvorrichtung über einen breiten Spannungsbereich von ca. 100 kV bis ca. 100 V abzustufen. Eine Messeinrichtung ist mit dem Spannungsteiler verbunden, um Rohmesswerte zu erhalten, die die Spannungssignale umfassen. Die Messeinrichtung umfasst einen Prozessor sowie einen drahtlosen Transceiver, um die Messwerte für eine drahtlose Übertragung an einen Empfänger vorzubereiten.

### Aufgabe der vorliegenden Erfindung

Die Aufgabe der vorliegenden Erfindung besteht darin, ein gattungsgemäßes Verfahren zum Sammeln und/oder Weiterleiten von Daten, einen hierfür einzusetzenden Sensor sowie ein entsprechendes Versorgungsnetz jeweils mit gesteigertem Informationsinhalt zur Verfügung zu stellen.

### Lösung der Aufgabe

Die vorstehende Aufgabe wird durch die Merkmale des Anspruchs 1 gelöst. Zweckmäßige Ausgestaltungen des erfindungsgemäßen Verfahrens werden in den abhängigen Ansprüchen beansprucht.

Erfindungsgemäß werden zur Festlegung der Messauflösung des Sensors die Bedingungen für ein Generieren von Zeitstempelungen unter Anwendung eines Korrelierungsmodells vorher festgelegt. Auf der Basis des Korrelierungsmodells werden Zeitstempelungen von aufeinanderfolgenden Rohmessdaten in dem Sensor generiert und in den Speichermitteln abgelegt. Anschließend werden lediglich die den erfassten Rohmessdaten zugeordneten Zeitstempelungen über die primäre Kommunikationsstrecke übertragen, so dass auf Basis der bei dem Master ankommenden Zeitstempelungen unter Anwendung des Korrelierungsmodells die vom Messelement erfassten Rohmessdaten nach erfolgter Übertragung wieder rekonstruiert und ausgewertet werden können. Hierdurch entfallen rechenaufwendige und deshalb energieintensive Rechenoperationen im Bereich des lokalen Sensors. Rechenaufwendige und energieintensive Rechenoperationen können somit in den Bereich des Masters oder eines Head-Ends verlagert werden. Das erfindungsgemäße Verfahren ermöglicht es, Zeitstempelungen von Rohmessdaten in einem fortlaufenden, vollständigen und konsistenten Zeitzusammenhang also lückenlos im Bereich der Abfrageeinrichtung bzw. des Masters bzw. des Konzentrators bereitzustellen und diese anschließend über die tertiäre Kommunikationsstrecke dem Head-End zuzuleiten. Die aus den Zeitstempelungen rekonstruierten Rohmessdaten können dem Zeitverlauf kontinuierlich zugeordnet werden, d.h. bilden einen Realzeit-Verlauf ab, der diskontinuierliche Lücken oder Datenfehlzeiten ausschließt. Der gemäß dem erfindungsgemäßen Verfahren im Head-End erzeugte kontinuierliche Rohmessdatenstrom besitzt im Vergleich zu bisherigen Lösungen eine sehr viel höhere Auflösung über der kontinuierlichen Zeitachse. Die Erfindung ermöglicht es, neben z. B. einer Verbrauchsberechnung eine viel größere Anzahl von Berechnungen und/oder Feststellungen und/oder Funktionen einschließlich "Business"-Funktionen im Head-End vornehmen zu können, als dies bisher möglich war. Das erfindungsgemäße Verfahren ermöglicht es darüber hinaus, Zustandsfeststellungen bezüglich eines Versorgungsnetzes vorzunehmen. Hierdurch kann dem Kunden eines Versorgungsnetzes eine wesentlich bessere Transparenz als bisher vom Anbieter geboten werden. Aufgrund des erfindungsgemäßen Verfahrens kann zudem der Aufbau des Sensors wesentlich einfacher und kostengünstiger sein, da komplexe Mikroprozessoren für Berechnungen wegfallen. Aufgrund des erfassten zeitlichen Zusammenhangs der Rohmessdaten können Manipulationen vermieden werden, da die Messergebnisse über deren gesamten zeitlichen Verlauf mit empirischen Werten über die gesamte Zeitachse verglichen werden können. Ferner ist der Energieverbrauch der Baugruppe aus Sensor und der Zeitstempelaufbereitung bzw. den Kommunikationsmitteln wegen des Wegfalls von energieintensiver Rechenleistung wesentlich geringer als bei bisherigen Ausführungen, welche die Daten lokal auswerten. Bei den Zeitstempelungen kann es sich um Zeitpunkte oder Zeitdifferenzen handeln. Die Zeitpunkte oder Zeitdifferenzen können Ist-Zeitdaten oder Realzeitdaten sein oder zumindest daran orientiert sein. Die Zeitdifferenzen können von Zeitstempelung zu Zeitstempelung und/oder von einem fest vorgegebenen Zeitpunkt ausgebildet sein.

Zwischen dem Master und einem Head-End kann sich eine tertiäre Kommunikationsstrecke befinden. Die Übertragung der Zeitstempelungen über die primäre und tertiäre Kommunikationsstrecke ermöglicht es, eine erheblich größere Anzahl von Berechnungen und/oder Feststellungen und/oder Funktionen einschließlich "Business"-Funktionen im Head-End, wo genügend Rechenleistung zur Verfügung steht, vornehmen zu können als bisher.

Die Zeitstempelungen können vorzugsweise in komprimierter Form über die primäre Kommunikationsstrecke übertragen werden. Dies ermöglicht geradezu das erfindungsgemäße Verfahren. So können durch das erfindungsgemäße Verfahren z.B. äquidistante Zeitstempelungen für ihre Übertragung vereinfacht festgelegt werden.

Bei dem Korrelierungsmodell kann ein bestimmter Wert oder eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung festgelegt werden, wobei bei einem Erfassen des bestimmten Werts oder der bestimmten Wertdifferenz oder der bestimmten Wertänderung durch das Messelement die Zeitstempelung ausgelöst, als solche in den Speichermittel des Sensors abgespeichert und für die Übertragung bereitgestellt wird. Ändert sich der vom Sensor erfasste Wert nicht, wird keine Zeitstempelung erzeugt. Somit können typisch für das erfindungsgemäße Verfahren längere Zeiträume ohne Zeitstempelung verstreichen. Es müssen somit nicht ständig Daten übertragen werden. Dennoch besitzt das Verfahren eine sehr gute Auflösung.

Insbesondere können im Rahmen des Korrelierungsmodells ein schrittweise oder inkrementell sich erhöhender Zählerstand und/oder eine Wertetabelle mittels Zeitstempelungen abgebildet werden.

Vorzugsweise sind die Zeitstempelungen mit einem Vorzeichen, z.B. Plus- oder Minusvorzeichen, versehen. Dies ist vor allem bei der Abbildung einer Wertetabelle von Vorteil, da hierdurch festgelegt wird, ob die konkrete Zeitstempelung einen aufsteigenden oder absteigenden Wert der Wertetabelle betrifft.

Gemäß der Erfindung werden eine Mehrzahl von Zeitstempelungen entlang der primären Kommunikationsstrecke jeweils als Datenpaket übertragen.

Beispielsweise kann es sich bei elementaren Messeinheiten um die elektrische Spannung oder um die Stromstärke handeln, die gemessen werden. Beispielsweise kann die Ausgangsspannung eines Hallsensors im Falle seiner Anregung oder die Spannung eines Temperaturfühlers erfasst werden.

Vorzugsweise ist der Rohmessdatenstrom in der Weiterfolge der Datenverarbeitung abgesehen von seiner zeitlichen Auflösung (Abtastrate oder Vielfaches der Abtastrate) jederzeit auf einer zeithistorischen Basis zeitlückenlos auswertbar. Daraus resultiert der Vorteil, dass z.B. auch in der Vergangenheit liegende ereignisbedingte Zustandsveränderungen im Versorgungsnetzwerk (wie z.B. Overflow, Underflow, Leckagen, Manipulationsversuche usw.) in genauer Zeitzuordnung und ohne Lücken feststellbar bzw. dokumentierbar sind. Ferner besteht die Möglichkeit, vergangene Verbrauchsdaten dem Verbraucher wesentlich genauer anzuzeigen und/oder bei Auswertungen hinsichtlich des Verbrauchsverhaltens bzw. Änderungen desselben besser miteinzubeziehen. Dies wiederum wirkt sich verbrauchsoptimierend aus und stellt für den Verbraucher eine besonders wichtige Information des Netzversorgers dar.

Bei den betreffenden aufeinanderfolgenden Rohmessdaten handelt es sich insbesondere um keine Berechnungen und/oder Auswertungen, sondern um elementare Messeinheiten.

Zweckmäßigerweise besitzt der Rohmessdatenstrom eine zeitliche Auflösung, die nur durch die Sensor-Abtastrate bzw. Messelement-Abtastrate oder ein Vielfaches derselben festgelegt oder zumindest bedingt ist. Die zeitliche Auflösung des Rohmessdatenstroms liegt vorzugsweise im Sekundenbereich, Zehntelsekundenbereich, Hundertstelsekundenbereich oder Tausendstelsekundenbereich.

Vorteilhaft ist der Rohmessdatenstrom unter Zugrundelegung der festgelegten Auflösung kontinuierlich und/oder vollständig. Daraus resultiert eine ganz besonders hohe Messwertauflösung entlang des kontinuierlichen Zeitverlaufs und daraus wiederum eine besondere Informationstiefe als Basis für darauf aufbauende Auswertungen bzw. Berechnungen.

Da die Übertragung der Zeitstempelungen erfindungsgemäß entlang der primären Kommunikationsstrecke drahtgebunden erfolgt, kann die Übertragung dort ohne Redundanz erfolgen. Daraus resultiert der Vorteil, dass im Vergleich zu einer Funkübertragung ganz erheblich weniger Daten über die primäre Kommunikationsstrecke übertragen werden müssen.

Vorzugsweise werden die gespeicherten Zeitstempelungen in den Speichermitteln des Sensors erst dann gelöscht, wenn die Übertragung der Rohmessdaten über die primäre Kommunikationsstrecke vom Empfänger bzw. Master bestätigt worden ist ("acknowledged data transfer").

Alternativ oder zusätzlich kann im Rahmen der Übertragung der Zeitstempelungen über die primäre Kommunikationsstrecke auch ein sogenanntes Hand-Shake-Verfahren durchgeführt werden.

Um den kontinuierlichen Rohmessdatenstrom zu erzeugen, werden die Daten-Pakete zweckmäßigerweise in einer entsprechenden Zeitabfolge-Referenz zusammengefügt oder zumindest zueinander in Relation gesetzt, sodass die in den Paketen enthaltenen Zeitstempelungen entlang der Realzeitachse entsprechend ihrer Abtastung und vorherigen Paketaufteilung später wieder zusammengefügt oder zumindest in eine fortlaufende zeitliche Relation zueinander gesetzt sind.

Die Festlegung der Frage, wann eine neue Datenübertragung in Form einer Nachricht oder eines Telegramms (eines oder mehrerer Datenpakete) durchzuführen ist, hängt erfindungsgemäß davon ab, ob mindestens die Bedingung b) der beiden Bedingungen
(a) Ablauf eines vorgegebenen Zeitintervalls und
(b) Erreichen einer vorgegebenen Menge an Zeitstempelungen seit der vorherigen Übertragung
erfüllt ist. Aufgrund dessen kann eine Zeitabfolge-Referenz der zu übertragenden Daten-Pakete in einfacher Weise realisiert werden.

Zweckmäßigerweise handelt es sich bei der drahtgebundenen primären Kommunikationsstrecke um ein BUS-System, vorzugsweise um ein sogenanntes M-BUS-System. Es kann aber auch eine Kommunikationsstrecke auf der Basis einer der nachfolgenden Datenübertragungsprotokolle, wie von RS232, PLC oder RS485, sein.

Die Komprimierung der Zeitstempelungen im Bereich des Sensors kann verlustfrei durchgeführt werden. Alternativ kann die Komprimierung der Zeitstempelungen aber auch mit einem vorgegebenen, zulässigen Verlustniveau durchgeführt werden. Wird die Datenkomprimierung mit einem vorgegebenen zulässigen Verlustniveau durchgeführt, kann, wenn der Benutzer oder Betreiber eine Energieeinsparung bevorzugt und eine gewisse Ungenauigkeit bei der Wiederherstellung und Wiedergabe der ursprünglichen Messdaten akzeptiert (d.h. einen gewissen Verlust akzeptiert), das Komprimierungsverhältnis dann zum Nachteil einer geringeren Genauigkeit bei der Wiedergabe auf der Empfängerseite erhöht werden. Das Verlustverhältnis oder das Komprimierungsverhältnis kann als programmierbarer oder einstellbarer Parameter vorgesehen sein, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden: eine differenzielle Komprimierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung).

Die vorliegende Erfindung betrifft des Weiteren einen Sensor, der hergerichtet ist für den lokalen Einsatz in einem eine Mehrzahl von lokalen Sensoren sowie einen mit dem oder den lokalen Sensoren über eine primäre Kommunikationsstrecke in Verbindung stehenden Master umfassenden Versorgungsnetz zur Verteilung eines Verbrauchsmediums, wie z.B. Wasser, Gas, Elektrizität, Treibstoff oder Wärme, gemäß der Merkmale des Anspruchs 16. Ein solcher Sensor kann Bestandteil eines Verbrauchszählers sein. Er ermöglicht es, im Rahmen des Betriebs eines Versorgungsnetzes den Verbrauch sowie weitere Zustandseigenschaften in sehr hoher Auflösung entlang des zeitlichen Verlaufs lückenlos und kontinuierlich zu gewährleisten.

Schließlich betrifft die vorliegende Erfindung auch ein Versorgungsnetz zur Verteilung eines Verbrauchsmediums wie z.B. Gas, Wasser, Elektrizität, Treibstoff oder Wärme mit mindestens einem lokalen Sensor vorzugsweise einer Mehrzahl von lokalen Sensoren zum Generieren und/oder Weiterleiten von Rohmessdaten, vorzugsweise Rohmessdaten in Zusammenhang mit einem Verbrauch an Verbrauchsmedium und/oder einem Betriebszustand eines Verbrauchszählers, mit einem Master, einer drahtgebundene primären Kommunikationsstrecke zwischen dem jeweiligen Sensor und dem Master, einem Head-End zur Auswertung der Daten sowie einer tertiären Kommunikationsstrecke zwischen Master und Head-End. Gemäß der vorliegenden Erfindung ist das Versorgungsnetz dadurch gekennzeichnet, dass ein Sensor nach Anspruch 16 vorgesehen ist.

### Beschreibung der Erfindung anhand von Ausführungsbeispielen

Nachstehend wird die vorliegende Erfindung anhand verschiedener Ausführungsbeispiele näher erläutert. Es zeigen:
- Fig. 1: eine stark vereinfachte schematische Darstellung eines Beispiels von Kommunikationsstrecken eines Versorgungsnetzes zum Sammeln und/oder Weiterleiten von Daten, die von einer Vielzahl von Verbrauchszählern aufgenommen werden, an einen Master und ein Head-End;
- Fig. 2: eine stark vereinfachte schematische Darstellungsweise eines Beispiels der Übertragung von Rohmessdaten charakteristischer Zeitstempelungen über die primäre Kommunikationsstrecke von Fig. 1 zum Master bzw. Konzentrator;
- Fig. 3: ein Beispiel für eine Nachrichtenstruktur, die von der Messdatenaufbereitung des Verbrauchszählers gemäß Fig. 2 über die primäre Kommunikationsstrecke emittiert bzw. abgefragt wird;
- Fig. 4: ein Beispiel für ein Chronogramm von Zeitstempelungen von den von einem Sensor ausgelesenen Rohmessdaten zwischen zwei Uplink-Übertragungsvorgängen (Nachrichten oder Telegramme, die zu den Zeitpunkten T_{E-1} und T_{E} emittiert werden), in einem Kontext der Fernablesung des Volumenverbrauchs (in diesem Fall enthält das Paket PAj n Zeitstempelungen TS n);
- Fig. 5: ein Beispiel für das Zusammenfügen der die Zeitstempelungen enthaltenen Datenpakete bzw. Nachrichten bzw. Telegramme sowie Rekonstruktionen zu einem zeitkontinuierlichen Rohmessdatenstrom einschließlich dessen Auswertemöglichkeiten in stark vereinfachter schematischer Darstellungsweise;
- Fig. 6: ein Beispiel eines Sensors eines Verbrauchszählers in Form eines mechanischen Durchflusszählers mit einem Flügelrad, mit dem entsprechende Rohmessdaten für den Durchfluss erzeugt werden können;
- Fig. 7: ein Beispiel eines auf Korrelationsmodells zur Generierung von Zeitstempelungen auf Basis der von dem Sensor gemäß Fig. 6 erfassten Rohmessdaten;
- Fig. 8: ein Beispiel eines Temperatursensors in vereinfachter Darstellung, sowie
- Fig. 9: ein weiteres Beispieleines Korrelationsmodells zur Generierung von Zeitstempelungen auf Basis der von dem Sensor gemäß Fig. 8 erfassten Rohmessdaten.

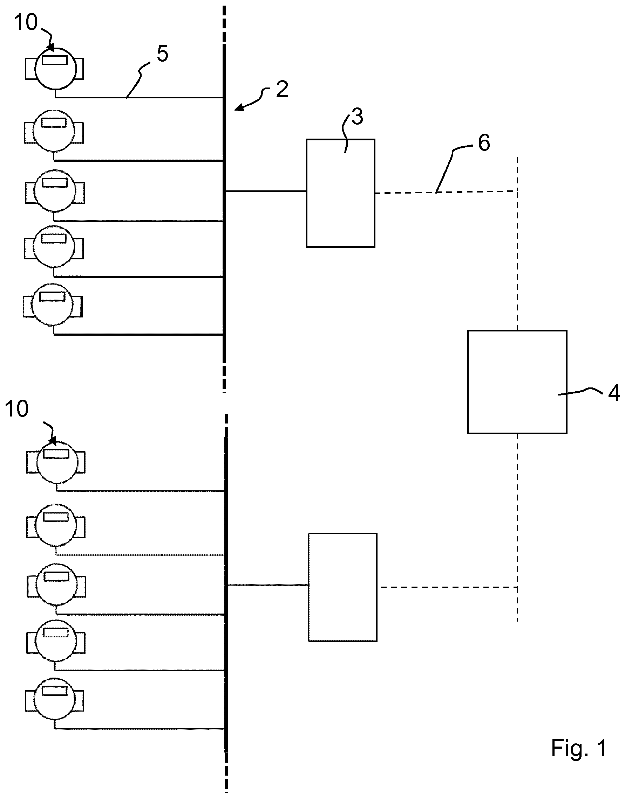

Fig. 1 zeigt ein Versorgungsnetz zur Verteilung von Verbrauchsmedien, wie z.B. Gas, Wasser, Elektrizität, Treibstoff oder Wärme. Das Versorgungsnetz umfasst eine Vielzahl von einzelnen lokalen Verbrauchszählern 10, die z.B. unterschiedlichen Wohneinheiten eines Mehrfamilienhauses zugeordnet sein können. Die einzelnen Verbrauchszähler 10, z.B. Wasserzähler, Wärmezähler, Elektrizitätszähler oder Gaszähler, sind über eine drahtgebundene primäre Kommunikationsstrecke 5 mit einem Master 3, der als Datensammler bzw. Konzentrator fungieren kann, verbunden. Die Datenübertragung von dem jeweiligen Verbrauchszähler 10 über die primäre Kommunikationsstrecke 5 zum Master 3 wird "Uplink-Übertragung" genannt.

Bei der drahtgebundenen primären Kommunikationsstrecke 5 handelt es sich beispielsweise um eine Strecke als Teil eines BUS-Systems 2, vorzugsweise eines sogenannten M-BUS-Systems. Das drahtgebundene Kommunikationssystem kann, wie aus Fig. 1 deutlich wird, zusätzliche, nicht dargestellte Verbrauchszähler je nach Bedarfslage umfassen.

Im Rahmen der Topologie der primären Kommunikationsstrecke 5 ist jeder einzelne Verbrauchszähler 10 mit einer zugehörigen ID (Adresse) versehen, sodass jeder einzelne Verbrauchszähler 10 vom Master 3 direkt adressiert werden kann und die im jeweiligen Verbrauchszähler 10 vorhandenen Daten abgerufen werden können. Die Topologie der drahtgebundenen primären Kommunikationsstrecke 5 kann je nach Bedarf unterschiedlich ausgebildet sein. Es kann sich um eine Ketten- (bzw. Reihen-) Topologie, Ring-Topologie, eine Stern-Topologie, eine Baum-Topologie oder eine Maschen-Topologie handeln. Welche Art von Topologie zum Einsatz kommen soll, hängt von den jeweils tatsächlichen Gegebenheiten ab. Bei der in Fig. 1 gezeigten Topologie sind die Verbrauchszähler in Reihe zueinander geschaltet.

Die Übertragung in dem drahtgebundenen Übertragungsmedium wird durch ein BUS-Übertragungsprotokoll vorgegeben, z.B. M-BUS-Übertragungsprotokoll. Der BUS selbst des BUS-Systems 2 ist nur passiv. Den aktiven Teil der Übertragung bewirkt der Master 3. Den zu übertragenen Daten werden die Adresse des Adressaten (Master) sowie die jeweilige Adresse (ID) des Absenders angehängt. Solche Stationen, die nicht als Empfänger adressiert sind, ignorieren die Daten.

Alternativ zu dem BUS-System bzw. M-BUS-System kann es sich bei der drahtgebundenen primären Kommunikationsstrecke 5 auch um eine Kommunikation auf der Grundlage von RS232, PLC oder RS485 handeln.

Der jeweilige Master 3 steht über eine tertiäre Kommunikationsstrecke 6 mit einem sogenannten Head-End 4 in Verbindung. Im Head-End 4 laufen die Daten des gesamten Versorgungsnetzes zusammen. Bei der tertiären Kommunikationsstrecke 6 kann es sich um eine drahtgebundene Kommunikationsstrecke oder um eine auf Funktechnologie basierende Kommunikationsstrecke (z.B. Mobilfunk-Kommunikationsstrecke) handeln. Alternativ können die Daten des jeweiligen Masters 3 bei Bedarf auch von einer portablen Leseeinrichtung ausgelesen und am Head-End 4 wieder eingelesen werden. Die Daten können entlang der tertiären Kommunikationsstrecke 6 auf unterschiedliche Art und Weise übertragen werden, beispielsweise via LAN, GPRS, LTE, 3G (bzw. 3+nG) usw.

Unter sekundärer Kommunikationsstrecke wird eine Kommunikationsstrecke zwischen mehreren Mastern bzw. Datensammlern bzw. Konzentratoren untereinander verstanden, auf die es jedoch vorliegend nicht ankommt.

Üblicherweise werden die einzelnen Verbrauchszähler 10 über die primäre Kommunikationsstrecke 5 gleichzeitig auch mit elektrischer Energie versorgt. Alternativ können sie aber auch bei Bedarf mit einer eigenständigen Energieversorgung (Akku) betrieben werden.

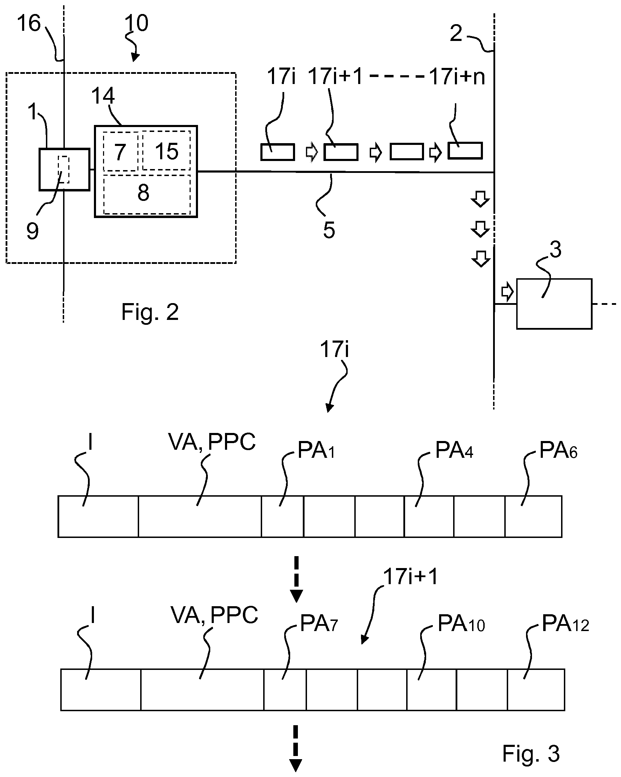

Gemäß Fig. 2 umfasst der jeweilige Verbrauchszähler 10 einen mit mindestens einem Messelement 9 ausgestatteten Sensor 1. Der Sensor 1 ist dazu vorgesehen, über das Messelement 9 Rohmessdaten zu erzeugen, die einer Messdatenaufbereitung 14 zugeführt werden. Die Rohmessdaten entsprechen vom Messelement 9 gelieferten elementaren Messeinheiten der mindestens einen physikalischen oder physikalisch-chemischen Größe oder des mindestens einen physikalischen oder physikalisch-chemischen Parameters. Bei den Rohmessdaten kann es sich beispielsweise um Rohdaten in Zusammenhang mit dem Durchfluss eines Mediums durch eine Versorgungsleitung 16, z.B. Wasserleitung, handeln, insbesondere die Durchflussmenge, die Trübung, das Vorhandensein von Schadstoffen oder das Vorhandensein eines festen und/oder gasförmigen Anteils bzw. fester und/oder gasförmiger Anteile.

Die Messwertaufbereitung 14 des Verbrauchszählers 10 umfasst Speichermittel 7, eine Zeitreferenzeinrichtung 15 (Quarz) sowie einen Mikroprozessor 8. Die vorgenannten Komponenten können getrennt oder als integrierte Gesamtkomponente vorgesehen sein.

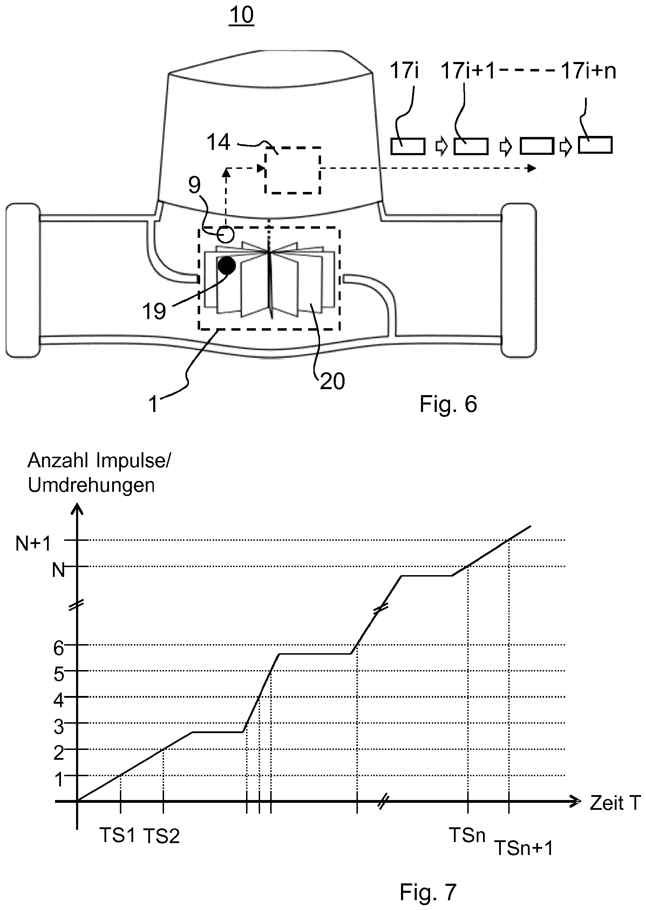

In Fig. 6 ist lediglich beispielhaft ein mechanischer Durchflusszähler 10 mit einem Sensor 1 für den Durchfluss dargestellt. Der Sensor 1 umfasst ein Flügelrad 20, ein Messelements 9 in Form z.B. eines Hallsensors sowie ein Impulsgeberelement 19, das sich abhängig von dem Durchfluss durch den Durchflusszähler 10 hindurch mehr oder weniger dreht. Die Drehbewegung des Flügelrads 20 wird von dem Messelement 9 als Spannungswert erfasst, der von dem Impulsgeberelement 19 angeregt wird, sofern sich der betreffende Flügel des Flügelrads 20 in der Position des Messelements 9 befindet. Eine Umdrehung des Flügelrades 20 entspricht daher einem bestimmten Durchflussvolumen, z.B. einem Liter an Fluid.

In der Messwertaufbereitung 14 ist ein Korrelierungsmodell hinterlegt, mit dem die Bedingungen für das Generieren von Zeitstempelungen bei bestimmten Rohmesswerten vorher festgelegt sind. Fig. 7 zeigt ein vereinfacht dargestelltes Beispiel eines solchen Korrelierungsmodells z. B. für eine fortlaufende kumulierende Durchflussmessung. Die Messeinheit ist hierbei z. B. ein vom Messelement 9 des in Fig. 6 dargestellten Sensors 1 erfasster Impuls z. B. ein Spannungsimpuls, der einer Umdrehung des Flügelrades 20 entspricht. Die vordefinierte Auflösung des Messverfahrens entspricht daher in diesem Beispiel einer Umdrehung des Flügelrads 20. Die Rohmesswerte also die durch die Umdrehungen ausgelösten Impulse sowie die zugehörigen Zeiten T werden in den Speichermitteln 7 des Sensors 1 abgespeichert. Die Messwertaufbereitung 14 generiert für jeden Rohmesswert (d. h. für jede Umdrehung/Impuls) eine zugehörige Zeitstempelung TS1, TS2...... bis TSn. Die Zeitstempelungen TS werden fortlaufend in den Speichermitteln 7 abgelegt. Dreht sich das Flügelrad 20 nicht, wird kein Impuls erzeugt und somit auch keine Zeitstempelung vorgenommen. Dreht sich das Flügelrad 20 langsamer, erfolgt der Zeitpunkt der Erfassung des Impulses entlang der Zeitachse T entsprechend später. Dementsprechend wird in diesem Fall eine spätere Zeitstempelung TS erzeugt. Wie aus Fig. 7 ersichtlich, werden somit eine Vielzahl von Zeitstempelungen TS generiert, die den über die betreffende Zeitspanne kontinuierlich gemessenen Durchfluss definieren.

Die Zeitstempelungen TS werden in Datenpaketen PA zusammengefasst und gemäß Fig. 2 als Datentelegramme 17i, 17i+1, 17i+n sukzessive nach Aufforderung durch den Master 3 über die drahtgebundene primäre Kommunikationsstrecke 5 an diesen übertragen. Die Datenübertragung kann hierbei vorzugsweise in komprimierter Form erfolgen. Es handelt sich folglich um einen kontinuierlichen lückenlosen Zeitstempelungs-Datenstrom von sehr hoher Auflösung, der in Form der einzelnen fortlaufenden Datentelegramme 17i, 17i+1, ...., 17i+n entlang der primären Kommunikationsstrecke 5 übertragen wird.

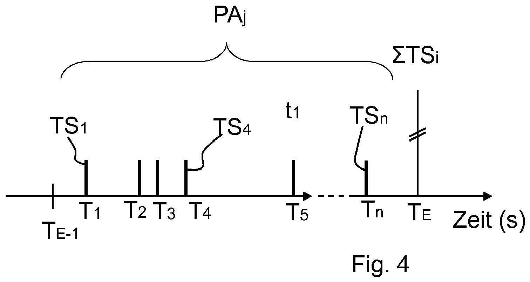

Fig. 4 zeigt exemplarisch ein Beispiel für eine Nachrichtenstruktur, die vom Sensor 1 bzw. Verbrauchszähler 10 an den Master 3 übertragen wird. Jede Zeitstempelung TS1 bis TSn entspricht hierbei im Rahmen des Korrelierungsmodells einer elementaren Fluidmenge, die durch den Sensor 1 gemessen wird. Das gemessene Fluid kann beispielsweise Gas, Wasser, Kraftstoff oder eine chemische Substanz sein. In dem Zeitintervall T_{E-1} bis T_{E} werden so n Impulse gemessen und die Zeitstempelungen TS1 bis TSn gespeichert, was bei einer Menge von z. B. einem Liter pro Zeitstempelung TS einer Durchflussmenge von insgesamt n Liter innerhalb dieses Zeitintervalls entspricht. Die Messwertaufbereitung bildet ein Datenpaket PAj, das n Zeitstempelungen TS1 bis TSn enthält. Aus der Mehrzahl von Datenpaketen z. B. PA1 bis PA 6 bzw. PA7 bis PA 12 werden gemäß Fig. 3 Datentelegramme 17 i, 17i+1 gebildet.

Damit sich das erfindungsgemäße Verfahren an Veränderungen in der Entwicklung des Parameters oder der Messgröße anpassen kann und gleichzeitig eine zufriedenstellende Aktualisierung der verfügbaren Momentandaten gewährleistet ist, kann das Verfahren vorteilhafterweise insbesondere darin bestehen, ein neues Paket bzw. Telegramm zu bilden bzw. eine neue Datenübertragung in Form einer Nachricht oder eines Telegramms durchzuführen, sobald mindestens die nachfolgende Bedingung b) erfüllt ist:
(a) Ein vorgegebenes Zeitintervall ist abgelaufen und
(b) eine vorgegebene Menge an insbesondere komprimierten gesammelten Daten seit der vorherigen Übertragung ist erreicht.

Die Anwendung der genannten Bedingung (b) kann beispielsweise darin bestehen, nachdem eine vorgegebene Anzahl neuer Rohmessdaten ausgelesen wurde, regelmäßig die Größe aller neuen Rohmessdaten in komprimierter oder verdichteter Form zu überprüfen.

Wenn diese Größen nahe einer kritischen Größe liegen, beispielsweise nahe der Größe eines durch das Übertragungsprotokoll festgelegten Pakets, wird ein neuer Übertragungsvorgang durchgeführt (Bedingung (b) vor Bedingung (a) verifiziert), es sei denn, die vordefinierte Grenzzahl zwischen zwei aufeinanderfolgenden Übertragungen wurde zuerst erreicht (Bedingung (a) vor Bedingung (b) verifiziert).

Dementsprechend werden zeitlich nacheinander Datentelegramme 17i, 17i+1, ...., 17i+n übertragen, die fortlaufende Zeitstempelungen TS enthalten. Aus diesen Zeitstempelungen TS kann empfängerseitig unter Anwendung des Korrelierungsmodells ein kontinuierlicher lückenloser Rohmessdatenstrom von sehr hoher Auflösung rekonstruiert werden.

Wie in Figur 3 beispielhaft dargestellt, kann zudem vorgesehen sein, zusammen mit den PAⱼ-Paketen der Zeitstempelungen TS auch die Identität (Adresse) I des betreffenden Sensors 1 und/oder den absoluten oder kumulierten Wert VA der bzw. des vom betreffenden Sensor 1 gemessenen physikalischen oder physikalisch-chemischen Größe oder Parameters in dem jeweiligen Datentelegramm 17i, 17i+1, ...., 17i+n zu übertragen, wobei der Wert VA mit einem Zeitstempel versehen oder einem der elementaren zeitgestempelten Messdaten, beispielsweise einem Indexwert eines Fluidzählers zugeordnet sein kann. Der Wert VA kann - gemäß Ausführungsbeispiel - z. B. der Zählerstand eines Wasserzählers zu einem bestimmten Zeitpunkt oder die Durchflussmenge durch den Wasserzähler seit einer vorherigen Datenübertragung (z. B. entspricht die Summe Σ der Zeitstempelungen TSi der Summe Σ der Durchflussmenge; siehe Figur 4) sein.

Das Verfahren kann auch darin bestehen, mit den PAⱼ -Paketen von Rohmessdaten den Wert mindestens eines anderen physikalischen oder physikalisch-chemischen Parameters PPC der Umgebung des betreffenden Sensors 1 oder des von diesem letzteren gemessenen Fluids zu einem bestimmten Zeitpunkt auszulesen und zu übertragen, wie beispielsweise die Leitfähigkeit des Fluids, die Temperatur des Fluids, den pH-Wert des Fluids, den Druck des Fluids, und/oder einen Parameter, der für die Qualität und/oder die Zusammensetzung des Fluids und/oder die Temperatur der Einbauumgebung des Sensors 1 kennzeichnend ist.

Fig. 3 zeigt beispielhaft die einzelnen Datentelegramme 17i, 17i+1, ...., 17i+n gemäß Fig. 2 etwas detaillierter. Die Datentelegramme 17i, 17i+1, ...., 17i+n umfassen jeweils zum einen eine Mehrzahl von Datenpaketen PA₁-PA₆ bzw. PA₇-PA₁₂, den absoluten oder kumulierten Wert VA sowie den Wert mindestens eines anderen physikalischen oder physikalisch-chemischen Parameters PPC der Umgebung des betreffenden Sensors 1 oder des von letzterem zu einem bestimmten Zeitpunkt gemessenen Fluids, wie z.B. die Leitfähigkeit des Fluids, die Temperatur des Fluids, den pH-Wert des Fluids, den Druck des Fluids, einen Parameter, der für die Qualität und/oder die Zusammensetzung des Fluids und/oder die Temperatur der Einbauumgebung des Sensors 1 kennzeichnend ist.

Wie in Fig. 3 weiterhin als Beispiel dargestellt ist, kann vorgesehen sein, die komprimierten Rohmessdaten durch Formatierung der PAj-Pakete, deren Größe einen vorgegebenen Maximalwert nicht überschreiten darf, zu verpacken, wobei jedes Mal, wenn die akkumulierten Daten die Größe eines Pakets (PAj) erreichen, ein neues Paket bzw. Telegramm gebildet wird bzw. eine neue Übertragung ausgelöst wird, sofern das vorgegebene Zeitintervall nicht vorher abgelaufen ist.

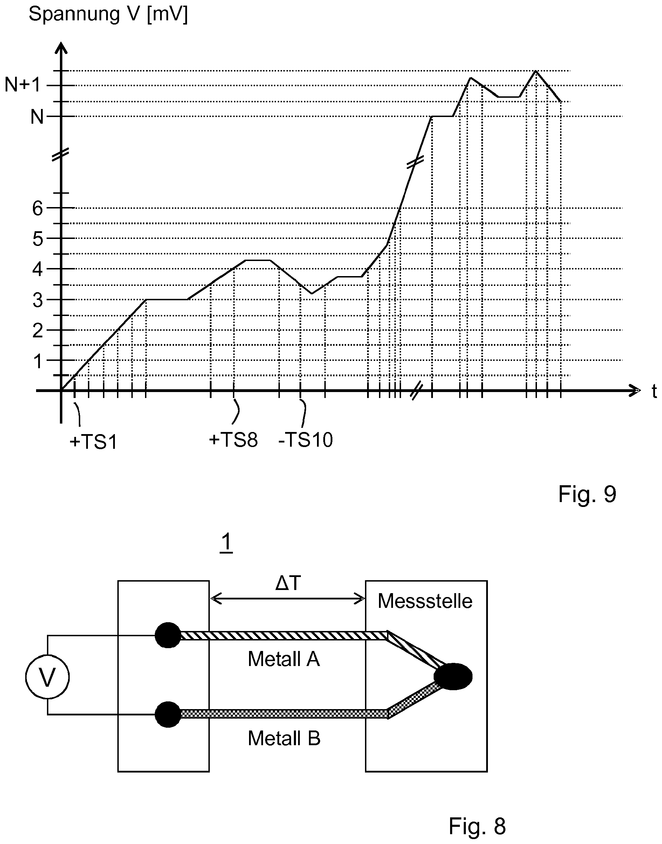

Die Sammlung von Daten ist nicht auf eine Durchflussmessung beschränkt. Fig. 8 zeigt beispielsweise einen Sensor 1 in Form eines auf Widerstandsmessung basierenden Temperaturfühlers. Der Temperaturfühler umfasst zwei im Bereich einer Messstelle miteinander verbundener Metallleiter (A, B) mit unterschiedlicher Wärmeleitfähigkeit. Im Falle eines Temperaturunterschieds ΔT zwischen der Messstelle und dem gegenüberliegenden Ende der beiden Leiter kann eine Spannung V bzw. Spannungsänderung abgegriffen werden. In diesem Fall kann als Korrelierungsmodell eine Zeitstempelung TS für eine Änderung der vom Sensor erfassen Spannung festgelegt werden.

Fig. 9 zeigt ein Beispiel für eine entsprechende Rohmessdatenkurve von Spannungswerten V zur Generierung von entsprechenden Zeitstempelungen TS bei einer Temperaturmessung. Dementsprechend wird bei jedem Anstieg oder Abfall der Spannung z. B. um 0,5 mV eine zugehörige Zeitstempelung TS generiert. Die festgelegte Auflösung des Verfahrens beträgt somit 0,5 mV. Da der Kurvenverlauf bei einer Temperaturmessung aufsteigend sowie abfallend sein kann, werden in diesem Fall die Zeitstempelungen mit einem Vorzeichen "+" für ansteigend oder "-" für abfallend versehen. Wie aus Fig. 9 deutlich wird, erhält man auch hier eine kontinuierliche Abfolge von Zeitstempelungen TS, die den gemessenen Spannungsverlauf und somit die Temperatur über den betrachteten Zeitraum sehr genau und lückenlos abbilden. Ändert sich die Temperatur d. h. die Spannung V nicht, wird keine Zeitstempelung generiert. Im Übrigen entspricht das Verfahren den in Zusammenhang mit dem eingangs beschriebenen Beispiel der Durchflussmessung dargelegten Maßnahmen.

Mit dem erfindungsgemäßen Verfahren können somit beliebige Rohmessdaten abgetastet werden.

Bei den Zeitstempelungen TS kann es sich insbesondere um Zeitpunkte oder Zeitdifferenzen handeln. Vorzugsweise ist ein Startzeitpunkt definiert.

Gemäß einer bevorzugten Variante der Erfindung werden die Zeitstempelungen vor deren Übertragung komprimiert. Die Komprimierung der Zeitstempelungen kann verlustfrei durchgeführt werden.

Alternativ kann die Komprimierung Zeitstempelungen auch mit einem vorgegebenen zulässigen Verlustniveau durchgeführt werden. In der Tat kann, wenn der Benutzer oder Betreiber eine Energieeinsparung bevorzugt und eine gewisse Ungenauigkeit bei der Wiederherstellung und Wiedergabe der ursprünglichen Rohmessdaten akzeptiert (d. h. einen gewissen Verlust akzeptiert), das Komprimierungsverhältnis dann zum Nachteil einer geringeren Genauigkeit bei der Wiedergabe auf der Empfangsseite erhöht werden. Dieses Verlustverhältnis oder das Komprimierungsverhältnis kann als programmierbarer oder einstellbarer Parameter vorgesehen werden, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden, eine differentielle Kodierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung) anzuwenden.

Vorzugsweise werden die Rohmessdaten in den Speichermitteln 7 des Verbrauchszählers 10 erst dann gelöscht, wenn die Übertragung der Rohmessdaten über die primäre Kommunikationsstrecke 5 vom Empfänger bzw. Master 3 bestätigt worden ist.

Alternativ oder zusätzlich hierzu kann im Rahmen der Übertragung der Rohmessdaten über die primäre Kommunikationsstrecke 5 auch ein Hand-Shake-Verfahren durchgeführt werden.

Dank der Erfindung ist es möglich, am Master bzw. Empfangsort (z. B. Head-End) über Informationen zu verfügen, die eine originalgetreue und vollständige Rekonstruktion aller von den verschiedenen Sensoren 1 gelieferten Rohmessdaten in sehr hoher zeitlicher Auflösung ermöglichen und eine unbegrenzte Flexibilität bei der Auswertung dieser Daten zulassen. So kann man einfach und zentral die Erweiterungsfähigkeit von "Business"-Funktionen berücksichtigen, ohne die Funktionsweise oder gar den Aufbau von Baugruppen (Sensoren, Kommunikationsmittel, und dergleichen) zu beeinflussen.

Der Aufbau des Sensors 1 kann im Vergleich zu bisher einfacher und sein Betrieb sicherer sein. Ferner ist der Energieverbrauch der Baugruppe aus dem Sensor 1 und den Kommunikationsmitteln 2 geringer als bei den aktuellen Ausführungen, welche die Daten lokal auswerten.

Der Fachmann versteht selbstverständlich, dass die Erfindung auf die Messung und Fernauslesung verschiedenster Parameter und Größen angewendet werden kann: Es genügt, eine elementare (vom Sensor 1 messbare) Veränderung eines Parameters oder einer Größe in Übereinstimmung mit der Auflösung des betrachteten Sensors 1 genau datieren zu können (die zeitgestempelte elementare Variation kann der Auflösung des Sensors oder möglicherweise einem Vielfachen dieser Auflösung entsprechen).

Im Zusammenhang mit einer vorteilhaften Anwendung der Erfindung, verbunden mit dem Begriff des Verbrauchs, kann vorgesehen sein, dass die oder eine der gemessenen physikalischen Größe(n) sich auf ein Strömungsmedium bezieht, wobei jede Zeitstempelung TS einer elementaren Fluidmenge entspricht, die durch den Sensor 1, abhängig von seiner Messgenauigkeit, gemessen wird. Das gemessene Fluid kann beispielsweise Gas, Wasser, Kraftstoff oder eine chemische Substanz sein.

Alternativ oder kumulativ zu der oben genannten Ausführungsvariante kann die Erfindung auch vorsehen, dass die oder eine der gemessene(n) physikalisch-chemische(n) Größe(n) ausgewählt ist aus der Gruppe, die gebildet wird durch die Temperatur, den pH-Wert, die Leitfähigkeit und den Druck eines durch den betreffenden Sensor 1 hindurchströmenden oder von diesem kontaktierten Fluids.

Wenn alternativ oder kumulativ mindestens ein Parameter gemessen wird, kann dieser oder einer dieser gemessene(n) physikalische(n) oder physikalisch-chemische(n) Parameter kennzeichnend sein für die Qualität und/oder Zusammensetzung eines Fluids, das den betreffenden Sensor 1 durchströmt oder mit ihm in Kontakt kommt, wie z. B. Trübung, das Vorhandensein von Schadstoffen oder das Vorhandensein eines festen und/oder gasförmigen Anteils bzw. fester und/oder gasförmiger Anteile.

Die oben genannten Größen und Parameter sind selbstverständlich nur Beispiele, die nicht beschränkend sind.

Vorzugsweise werden die Zeitstempelungen TS ohne Redundanz von dem jeweiligen Verbrauchszähler 10 bzw. Sensor 1 zum Master 3 übertragen. Mit anderen Worten: Es müssen also keine wiederholten Übertragungen vorgenommen werden. Daraus resultiert der Vorteil, dass über die primäre Datenkommunikationsstrecke 5 erheblich weniger Daten übertragen werden müssen als dies bisher bei einer drahtgebundenen Übertragung der Fall ist.

Dementsprechend werden fortlaufend Datentelegramme zu einem bestimmten Zeitpunkt gebildet und über die primäre Kommunikationsstrecke 5 sukzessive übertragen. Die einzelnen Datenpakete PA1, ..., PAn ermöglichen im Anschluss daran in ihrer Summe einen fortlaufenden Rohmessdatenstrom 13.

Wie in Fig. 1 schematisch dargestellt, werden die vorzugsweise komprimierten und formatierten Zeitstempelungen TS jedes betreffenden Sensors 1 bzw. Verbrauchszählers 10 an den Master 3, der ein lokales Netzwerk einer Vielzahl von ihm zugeordneten Fluidzählern 10 bzw. Sensoren 1 verwaltet, übertragen. Von dem Master 3 werden die vorzugsweise komprimierten und formatierten Zeitstempelungen TS zusammen mit den vorzugsweise komprimierten und formatierten Rohmessdaten jedes der anderen Sensoren 1, die Teil des Versorgungsnetzes sind, an das Head-End 4 übertragen.

Der Master 3 kann die von den jeweiligen Sensoren bzw. Verbrauchszählern abgerufenen Zeitstempelungen entweder über ein Zeitintervall (z.B. einen Tag) speichern und dann an einen Verarbeitungsstandort bzw. an das Head-End 4 weiterleiten. Alternativ können die Daten vom Master 3 auch sofort an das Head-End 4 weitergeleitet werden.

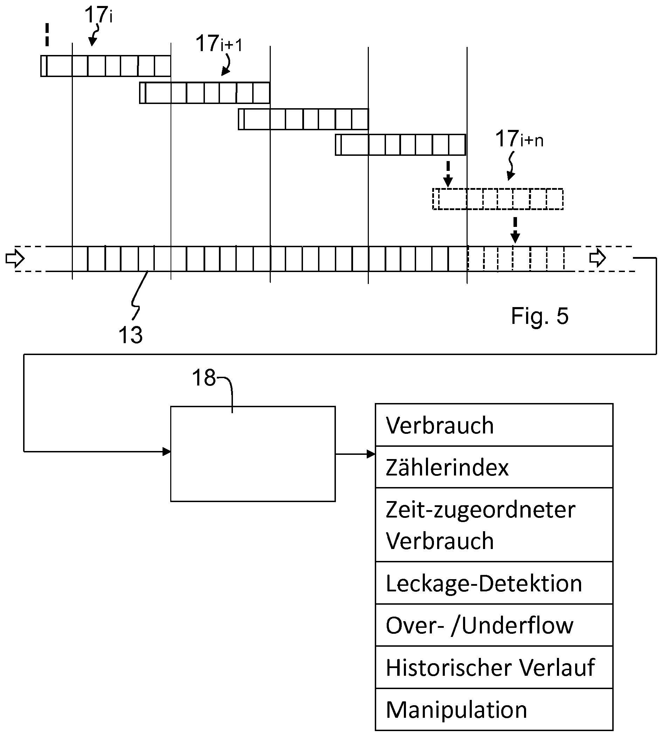

Fig. 5 zeigt die Weiterverarbeitung der einzelnen in Datentelegrammen 17i-17i+n bereitgestellten Zeitstempelungen zu einer fortlaufenden zusammenhängenden Zuordnung, aus der anhand des Korrelierungsmodells ein lückenloser Rohmessdatenstrom 13 rekonstruiert werden kann. Hierbei werden die einzelnen Datentelegramme 17i-17i+n so zusammengefügt, dass die jeweiligen Daten bzw. Datenpakete (PAj) bzw. die darin enthaltenen Zeitstempelungen in Zeitrelation mit denen der benachbarten Datenpakete gebracht werden.

Durch die erfindungsgemäße Sammlung von Rohmessdaten, die von den Sensoren 1 des oder eines bestimmten Netzwerks geliefert werden, ermöglicht die Erfindung alle Arten von Auswertung, Analyse, Überprüfung, Überwachung sowie allgemein nützlicher oder gewünschter Verarbeitung und Verwertung, da die grundlegende einzelne Rohinformation zur Verfügung steht. Die Auswertung der bereitgestellten Rohmessdaten erfolgt vorzugsweise im Bereich des Head-Ends 4 über Auswertemittel 18 und ergibt eine Vielzahl wichtiger Informationen, die für die Verwaltung des Versorgungsnetzes notwendig sind, bisher aber noch nicht generiert werden konnten, wie z.B. Verbrauch, Zählerindex, zeitzugeordneter Verbrauch, Leckage-Detektion, Over-/Underflow, historischer Verlauf und/oder Manipulation. Informationen können somit jederzeit auch retrospektiv zeitlückenlos abgerufen und einer bisherigen Auswertung zugeführt werden.

Das erfindungsgemäße Verfahren hat den Vorteil, dass Datenpakete bzw. Datentelegramme nicht wiederholt über die primäre Kommunikationsstrecke 5 übertragen werden müssen.

Die rekonstruierten Rohmessdaten liegen im Head-End 4 erfindungsgemäß in sehr hoher Auflösung (Granularität) ohne zeitliche Lücken vor. Demzufolge liegen im Gegensatz zu bisherigen Verfahren aufgrund des erfindungsgemäßen Verfahrens im Head-End 4 sehr viel mehr verwertbare Daten vor als bisher.

Der im Head-End 4 vorliegende Rohmessdatenstrom 13 besitzt vorzugsweise eine Auflösung im Sekundenbereich, Zehntelsekundenbereich, Hundertstelsekundenbereich oder Tausendstelsekundenbereich.

Gegenstand der Erfindung ist auch, wie in Fig. 1 schematisch dargestellt, ein Versorgungsnetz zur Verteilung eines insbesondere fluiden Verbrauchsguts unter Einsatz einer drahtgebundenen primären Kommunikationsstrecke 5 sowie entsprechend hergerichtete Verbrauchszähler 10, die in dem Versorgungsnetz betrieben werden. Der jeweilige Verbrauchszähler 10 umfasst, vgl. Fig. 2, mindestens einen Sensor 1, welcher über ein Messelement 9 Rohmessdaten erfassen kann. Des Weiteren umfasst der jeweilige Verbrauchszähler 10 eine Messdatenaufbereitung 14, die einen Mikroprozessor 8, Speichermittel 7 sowie eine Zeitreferenzeinrichtung 15 beinhaltet. In der Messdatenaufbereitung 14 erfolgt eine Zeitstempelung der Rohmessdaten, eine Komprimierung der zeitgestempelten Rohmessdaten sowie eine Aufbereitung in ein Format, das zur Übertragung entlang der primären Kommunikationsstrecke 5 gemäß einem bestimmten Protokoll geeignet ist.

Eine Stromversorgung des jeweiligen Verbrauchszählers 10 kann über die primäre Kommunikationsstrecke 5 erfolgen. Alternativ kann der Verbrauchszähler 10 jedoch auch eine (nicht dargestellte) eigene Stromversorgung in Form einer Batterie oder dergleichen bei Bedarf umfassen.

Im Bereich des Head-Ends 4 sind Auswertemittel 18 vorgesehen, die in der Lage sind, die als Chronogramme ausgebildeten, einzelnen Datentelegramme 17i-17i+n bzw. deren Datenpakete PAj zeitkontinuierlich und ohne Lücken zu einem fortlaufenden lückenlosen Rohmessdatenstrom 13 zusammenzuführen und hieraus entsprechende Dekomprimierungen, Auswertungen, Berechnungen und dergleichen vorzunehmen. Die entsprechenden Daten umfassen vorzugsweise alle in dem Versorgungsnetz befindlichen Verbrauchszähler 10.

Darüber hinaus umfasst das vorgenannte System für das betreffende oder jedes geografische Gebiet, in dem die Verbrauchszähler 10 installiert sind, einen festen Master 3 (Konzentrator), der mit den Verbrauchszählern 10 des Gebietes, das ihm zugewiesen ist, eine drahtgebundene primäre Kommunikationsstrecke 5 des Versorgungsnetzes bildet. Die Verbrauchszähler 10 bzw. deren Sensoren 1 sind hierbei die Slaves des Masters 3. Der Master 2 ist wiederum über eine tertiäre Kommunikationsstrecke 6 mit dem Head-End 4 verbunden. Die Daten können entlang der tertiären Kommunikationsstrecke 6 auf unterschiedliche Art und Weise übertragen werden, beispielsweise via LAN, GPRS, LTE, 3G (bzw. 3+nG) usw.

Vorzugsweise bilden die Speichermittel 7 eines jeden Sensors 1 bzw. Verbrauchszählers 10 einen Pufferspeicher und sind geeignet und dazu hergerichtet, den Inhalt mehrerer PAj-Pakete von Zeitstempelungen TS insbesondere im komprimierten Zustand zu speichern, wobei der Inhalt oder ein Teil des Inhalts dieses Pufferspeichers bei jeder Übertragung bzw. Abrufs durch den Master 3 übertragen wird.

Die von jedem Master 3 gesammelten Informationen werden direkt oder indirekt an das Head-End 4 übermittelt. Dort werden auch die "Business"-Funktionen definiert und ausgeführt.

Selbstverständlich ist die Erfindung nicht auf die in den beigefügten Zeichnungen beschriebenen und dargestellten Ausführungsformen beschränkt. Änderungen bleiben möglich, insbesondere hinsichtlich der Beschaffung der verschiedenen Elemente oder durch technische Entsprechungen, ohne dass dadurch der Schutzbereich der Erfindung verlassen wird, der durch die folgenden Ansprüche definiert wird.

### BEZUGSZEICHENLISTE

- 1: Sensor
- 2: BUS-System
- 3: Master
- 4: Head-End
- 5: primäre Kommunikationsstrecke
- 6: tertiäre Kommunikationsstrecke
- 7: Speichermittel
- 8: Mikroprozessor
- 9: Messelement
- 10: Verbrauchszähler
- 12: Impuls
- 13: Rohmessdatenstrom
- 14: Messdatenaufbereitung
- 15: Zeitreferenzeinrichtung
- 16: Versorgungsleitung
- 17: Datentelegramm
- 18: Auswertemittel
- 19: Impulsgeberelement
- 20: Flügelrad
- 21: Zentrale Speichermittel
- 22: Ultraschallwandlerelement
- 23: Ultraschallwandlerelement
- 24: Ultraschallmessstrecke

- PAj: Datenpaket
- TS: Zeitstempelung

## Patentansprüche

1. Verfahren zum Sammeln, in Zusammenhang mit einem Verbrauch, einem physikalischen oder physikalisch-chemischen Parameter und/oder einem Betriebszustand im Rahmen eines Betriebs eines lokalen Sensors (1),
von Daten eines Sensors (1) für einen Verbrauchszähler (10), als Bestandteil eines mindestens einen lokalen Sensor (1) vorzugsweise eine Mehrzahl von lokalen Sensoren (1), sowie einen mit dem oder den lokalen Sensor(en) über eine primäre Kommunikationsstrecke (5) in Verbindung stehenden Master (3) umfassendes Versorgungsnetzes zur Verteilung eines Verbrauchsguts, wobei
der Sensor (1) ein Messelement (9) enthält,
das Messelement (9) des jeweiligen Sensors (1) elementare Messeinheiten, die mindestens einer physikalischen oder physikalisch-chemischen Größe oder mindestens eines physikalischen oder physikalisch-chemischen Parameters entsprechen, als Rohmessdaten liefert, und
zwischen dem jeweiligen Sensor (1) und dem Master (3) eine drahtgebundene primäre Kommunikationsstrecke (5) vorgesehen ist,
der Sensor (1) Speichermittel (7) umfasst, wobei
zur Festlegung der Messauflösung des Sensors (1) die Bedingungen für ein Generieren von Zeitstempelungen (TS) unter Anwendung eines Korrelierungsmodells vorher festgelegt werden,
auf der Basis des Korrelierungsmodells Zeitstempelungen (TS) von aufeinanderfolgenden Rohmessdaten in dem Sensor (1) generiert werden,
die Zeitstempelungen (TS) über die primäre Kommunikationsstrecke (6) übertragen werden, so dass auf Basis der bei dem Master (3) ankommenden Zeitstempelungen (TS) unter Anwendung des Korrelierungsmodells die vom Messelement (9) erfassten Rohmessdaten rekonstruiert und ausgewertet werden, und wobei
eine Mehrzahl von Zeitstempelungen (TS) entlang der primären Kommunikationsstrecke (5) jeweils als Datenpaket (17i, 17i+n) übertragen werden, wobei ein Datenpaket jeweils mehrere Zeitstempelungen (TS1-TSn) enthält,
eine neue Datenübertragung vom Sensor (1) in Form eines Datenpakets durchgeführt wird, sobald mindestens die folgende Bedingung erfüllt ist:
Erreichen einer vorgegebenen Menge an insbesondere komprimierten gesammelten Zeitstempelungen (TS) seit der vorherigen Datenübertragung.

2. Verfahren nach Anspruch 1, **dadurch gekennzeichnet, das** zwischen dem Master (3) und einem Head-End (4) eine tertiäre Kommunikationsstrecke (6) vorgesehen ist

3. Verfahren nach Anspruch 1 oder 2, **dadurch gekennzeichnet, dass** die Zeitstempelungen (TS) in komprimierter Form über die primäre Kommunikationsstrecke (6) übertragen werden.

4. Verfahren nach einem der vorhergehenden Ansprüche, **dadurch gekennzeichnet, dass,** im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung (TS) festgelegt wird, bei einem Erfassen des bestimmten Werts, der bestimmten Wertänderung oder der bestimmten Wertdifferenz durch das Messelement (9) eine Zeitstempelung (TS) ausgelöst und in den Speichermittel (7) des Sensors (1) abgespeichert wird.

5. Verfahren nach einem der vorhergehenden Ansprüche, **dadurch gekennzeichnet, dass,** im Rahmen des Korrelierungsmodells (i) ein schrittweise oder inkrementell sich erhöhender Zählerstand und/oder eine Wertetabelle mittels Zeitstempelungen (TS) abgebildet wird.

6. Verfahren nach einem der vorhergehenden Ansprüche, **dadurch gekennzeichnet, dass** die Zeitstempelungen (TS) mit einem Vorzeichen versehen sind.

7. Verfahren nach einem der vorhergehenden Ansprüche, **dadurch gekennzeichnet, dass** auf Basis der bei dem Master (3) ankommenden Zeitstempelungen (TS) unter Anwendung des Korrelierungsmodells ein Rohmessdatenstrom (13) generiert wird, wobei insbesondere vorgesehen ist, **dass** der Rohmessdatenstrom (13) in der Weiterfolge der Datenverarbeitung abgesehen von der Messauflösung des Sensors (1) auf einer zeithistorischen Basis zeitlückenlos auswertbar ist.

8. Verfahren nach einem der vorhergehenden Ansprüche, **dadurch gekennzeichnet, dass** es sich bei den elementaren Messeinheiten um die elektrische Spannung oder um die Stromstärke handelt.

9. Verfahren nach einem der vorhergehenden Ansprüche, **dadurch gekennzeichnet, dass** die gemessene physikalische Größe sich auf ein Versorgungsmedium, vorzugsweise Wasser, Strom, Treibstoff oder Gas, eines Versorgungsnetzes bezieht und/oder der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor (1) strömt oder von diesem kontaktiert wird.

10. Verfahren nach einem der vorhergehenden Ansprüche, **dadurch gekennzeichnet, dass** die elementare Messeinheit (9)eine Zeitstempelung (TS) generiert, sobald die elementare Messeinheit (9) einen Impuls empfängt.

11. Verfahren nach einem der vorhergehenden Ansprüche, **dadurch gekennzeichnet, dass** die Zeitstempelungen (TS) über die primäre Kommunikationsstrecke (6) ohne Redundanz übertragen werden.

12. Verfahren nach einem der vorhergehenden Ansprüche, **dadurch gekennzeichnet, dass** die Zeitstempelungen (TS) in den Speichermitteln (7) des Sensors (1) erst dann gelöscht werden, wenn die Übertragung der Zeitstempelungen (TS) über die primäre Kommunikationsstrecke (5) vom Empfänger bzw. Master (3) bestätigt worden ist.

13. Verfahren nach einem der vorhergehenden Ansprüche, **dadurch gekennzeichnet, dass** im Rahmen der Übertragung der Zeitstempelungen (TS) über die primäre Kommunikationsstrecke (5) ein Hand-Shake-Verfahren durchgeführt wird.

14. Verfahren nach einem der vorhergehenden Ansprüche, **dadurch gekennzeichnet, dass** nach dem Empfang der Datenpakete (PAj) oder Datentelegramme (17i, 17i+n) diese in entsprechender Zeitabfolge-Referenz wieder zusammengefügt werden.

15. Verfahren nach einem der vorhergehenden Ansprüche, **dadurch gekennzeichnet, dass** es
sich bei der drahtgebundenen primären Kommunikationsstrecke (5)
um ein BUS-System, vorzugsweise um ein M-BUS-System oder um
eine Kommunikationsstrecke auf der Basis von RS232, PLC oder RS485 handelt.

16. Sensor (1), zum Sammeln von Daten, in Zusammenhang mit einem Verbrauch, einem physikalischen oder physikalisch-chemischen Parameter und/oder einem Betriebszustand im Rahmen eines Betriebs des Sensors (1),
vorzugsweise für einen Verbrauchszähler (10), wobei
der Sensor (1) über eine primäre Kommunikationsstrecke (5) eines einen Master (3) umfassenden Versorgungsnetzes zur Verteilung eines Verbrauchsguts mit dem Master verbindbar ist, wobei
der Sensor (1) ein Messelement (9) enthält,
das Messelement (9) des jeweiligen Sensors (1) dazu eingerichtet ist, elementare Messeinheiten, die mindestens einer physikalischen oder physikalisch-chemischen Größe oder mindestens eines physikalischen oder physikalisch-chemischen Parameters entsprechen, als Rohmessdaten zu liefern,
der Sensor (1) Speichermittel (7) umfasst, wobei
der Sensor (1) mit dem Master (3) über eine drahtgebundene primäre Kommunikationsstrecke (5) verbindbar ist, wobei
der Sensor dazu eingerichtet ist,
- zur Festlegung der Messauflösung des Sensors (1) die Bedingungen für ein Generieren von Zeitstempelungen (TS) unter Anwendung eines Korrelierungsmodells vorher festzulegen,
- auf der Basis des Korrelierungsmodells Zeitstempelungen (TS) von aufeinanderfolgenden Rohmessdaten in dem Sensor (1) zu generieren,
- die Zeitstempelungen (TS) über die primäre Kommunikationsstrecke zu versenden, wobei
der Sensor (1) dazu eingerichtet ist,
eine Mehrzahl von Zeitstempelungen (TS) entlang der primären Kommunikationsstrecke (5) jeweils als Datenpaket (17i, 17i+1) zu versenden, wobei ein Datenpaket jeweils mehrere Zeitstempelungen (TS1-TSn) enthält,
eine neue Datenübertragung vom Sensor (1) in Form eines Datenpakets durchzuführen, sobald mindestens die folgende Bedingung erfüllt ist:
Erreichen einer vorgegebenen Menge an insbesondere komprimierten gesammelten Zeitstempelungen (TS) seit der vorherigen Datenübertragung.

17. Versorgungsnetz zur Verteilung eines Verbrauchsmediums mit
mindestens einem lokalen Sensor (1), vorzugsweise einer Mehrzahl von lokalen Sensoren (1), zum Generieren und/oder Weiterleiten von Rohmessdaten in Zusammenhang mit einem Verbrauch an Verbrauchsmedium, einem physikalischen oder physikalisch-chemischen Parameter und/oder einem Betriebszustand eines Verbrauchszählers (10),
einem Master (3),
einer drahtgebundenen primären Kommunikationsstrecke (5) zwischen dem jeweiligen Sensor (1) und dem Master (3),
einem Head-End (4) zur Auswertung der Daten, sowie einer tertiären Kommunikationsstrecke (6) zwischen Master (3) und Head-End (4), **dadurch gekennzeichnet, dass** als Sensor ein Sensor (1) nach Anspruch 16 vorgesehen ist.

## Claims

1. Method for collecting data, associated with a consumption, a physical or physical/chemical parameter and/or an operating status during operation of a local sensor (1), from a sensor (1) for a consumption meter (10), as a component of a supply network for distributing a consumable, which supply network comprises at least one local sensor (1), preferably a plurality of local sensors (1), and a master (3), which is in communication with the local sensor(s) via a primary communication path (5), wherein
the sensor (1) contains a measuring element (9),
the measuring element (9) of the respective sensor (1) supplies, as raw measurement data, elementary measurement units, which correspond to at least one physical or physical/chemical variable or at least one physical or physical/chemical parameter, and
a wired primary communication path (5) is provided between the respective sensor (1) and the master (3),
the sensor (1) comprises storage means (7), wherein
in order to define the measurement resolution of the sensor (1), the conditions for generating time stamps (TS) are defined in advance using a correlation model,
time stamps (TS) of successive items of raw measurement data are generated in the sensor (1) on the basis of the correlation model,
the time stamps (TS) are transmitted via the primary communication path (6) so that the raw measurement data acquired by the measuring element (9) is reconstructed using the correlation model on the basis of the time stamps (TS) received by the master (3), and analysed, and wherein
a plurality of time stamps (TS) are transmitted as one data packet (17i, 17i+n) along the primary communication path (5), wherein a data packet respectively contains a plurality of time stamps (TS1-TSn),
a new data transmission is performed by the sensor (1) in the form of a data packet, as soon as at least the following condition is met:
reaching a specified amount of, in particular compressed, collected time stamps (TS) since the previous data transmission.

2. Method according to Claim 1, **characterized in that** a tertiary communication path (6) is provided between the master (3) and a head-end (4).

3. Method according to Claim 1 or 2, **characterized in that** the time stamps (TS) are transmitted in compressed form via the primary communication path (6) .

4. Method according to one of the preceding claims, **characterized in that** a specific value, a specific change in value or a specific difference in value of the at least one physical or physical/chemical variable or of the at least one physical or physical/chemical parameter is defined within the correlation model for the purpose of assigning a time stamp (TS),
when the measuring element (9) detects the specific value, the specific change in value or the specific difference in value, a time stamp (TS) is actuated and saved in the storage means (7) of the sensor (1) .

5. Method according to one of the preceding claims, **characterized in that** a meter reading that increases in steps or incrementally and/or a value table is/are modelled within the correlation model (i) using time stamps (TS).

6. Method according to one of the preceding claims, **characterized in that** the time stamps (TS) are given a sign.

7. Method according to one of the preceding claims, **characterized in that** a raw measurement-data stream (13) is generated using the correlation model on the basis of the time stamps (TS) received at the master (3), wherein provision is made, in particular, for the raw measurement-data stream (13) to be able to be analysed in the further course of the data processing on a time-historical basis with no time gaps, aside from the measurement resolution of the sensor (1).

8. Method according to one of the preceding claims, **characterized in that** the elementary measurement units are the voltage or the current.

9. Method according to one of the preceding claims, **characterized in that** the measured physical variable relates to a supply medium, preferably water, electricity, fuel or gas, of a supply network, and/or the, or one of the, measured physical or chemical/physical parameter(s) is an indicator of the volume, quality and/or composition of a fluid that is flowing through, or makes contact with, the sensor (1) concerned.

10. Method according to one of the preceding claims, **characterized in that** the elementary measurement unit (9) generates a time stamp (TS) as soon as the elementary measurement unit (9) receives a pulse.

11. Method according to one of the preceding claims, **characterized in that** the time stamps (TS) are transmitted without redundancy via the primary communication path (6).

12. Method according to one of the preceding claims, **characterized in that** the time stamps (TS) in the storage means (7) of the sensor (1) are deleted only once the transmission of the time stamps (TS) via the primary communication path (5) has been confirmed by the receiver or master (3).

13. Method according to one of the preceding claims, **characterized in that** a hand-shake procedure is performed as part of the transmission of the time stamps (TS) via the primary communication path (5).

14. Method according to one of the preceding claims, **characterized in that** after being received, the data packets (PAj) or data telegrams (17i, 17i+n) are reassembled in a corresponding time-sequence reference.

15. Method according to one of the preceding claims, **characterized in that**
the wired primary communication path (5) is
a BUS system, preferably an M-BUS system, or
a communication path based on RS232, PLC or RS485.

16. Sensor (1) for collecting data, associated with a consumption, a physical or physical/chemical parameter and/or an operating status during operation of the sensor (1),
preferably for a consumption meter (10), wherein
the sensor (1) can be connected to a master (3) via a primary communication path (5) of a supply network which comprises the master and is intended to distribute a consumable, wherein
the sensor (1) contains a measuring element (9),
the measuring element (9) of the respective sensor (1) is configured to supply, as raw measurement data, elementary measurement units, which correspond to at least one physical or physical/chemical variable or at least one physical or physical/chemical parameter,
the sensor (1) comprises storage means (7), wherein
the sensor (1) can be connected to the master (3) via a wired primary communication path (5), wherein
the sensor is configured
- in order to define the measurement resolution of the sensor (1), to define the conditions for generating time stamps (TS) in advance using a correlation model,
- to generate time stamps (TS) of successive items of raw measurement data in the sensor (1) on the basis of the correlation model,
- to transmit the time stamps (TS) via the primary communication path (6), wherein
the sensor (1) is configured
to transmit a plurality of time stamps (TS) as one data packet (17i, 17i+n) along the primary communication path (5), wherein a data packet respectively contains a plurality of time stamps (TS1-TSn),
to perform a new data transmission from the sensor (1) in the form of a data packet, as soon as at least the following condition is met:
reaching a specified amount of, in particular compressed, collected time stamps (TS) since the previous data transmission.

17. Supply network for distributing a consumption medium, comprising
at least one local sensor (1), preferably a plurality of local sensors (1), for generating and/or transferring raw measurement data associated with a consumption of consumption medium, with a physical or physical/chemical parameter and/or an operating status of a consumption meter (10),
a master (3),
a wired primary communication path (5) between the respective sensor (1) and the master (3),
a head-end (4) for analysing the data, and
a tertiary communication path (6) between master (3) and head-end (4), **characterized in that** a sensor (1) according to Claim 16 is provided as sensor.

## Revendications

1. Procédé permettant de collecter, en relation avec une consommation, un paramètre physique ou physico-chimique et/ou un état de fonctionnement dans le cadre d'un fonctionnement d'un capteur local (1),
des données d'un capteur (1) pour un compteur de consommation (10), en faisant partie d'un réseau d'alimentation comprenant au moins un capteur local (1), de préférence une pluralité de capteurs locaux (1), ainsi qu'un maître (3) en communication avec le capteur local ou les capteurs locaux par un trajet de communication primaire (5) pour la distribution d'un produit de consommation, dans lequel
le capteur (1) comporte un élément de mesure (9),
l'élément de mesure (9) du capteur (1) respectif fournit en tant que données de mesure brutes des unités de mesure élémentaires qui correspondent à au moins une grandeur physique ou physico-chimique ou à au moins un paramètre physique ou physico-chimique, et
un trajet de communication primaire filaire (5) est prévu entre le capteur (1) respectif et le maître (3),
le capteur (1) comprend des moyens de stockage (7), dans lequel
pour définir la résolution de mesure du capteur (1), les conditions d'une génération d'horodatages (TS) en appliquant un modèle de corrélation sont prédéfinies,
des horodatages (TS) de données de mesure brutes consécutives sont générés dans le capteur (1) sur la base du modèle de corrélation,
les horodatages (TS) sont transmis sur le trajet de communication primaire (6) de sorte que sur la base des horodatages (TS) arrivant au niveau du maître (3), en appliquant le modèle de corrélation, les données de mesure brutes détectées par l'élément de mesure (9) sont restituées et analysées, et dans lequel
une pluralité d'horodatages (TS) est transmise sur le trajet de communication primaire (5) respectivement sous la forme d'un paquet de données (17i, 17i+n), un paquet de données comportant respectivement plusieurs horodatages (TS1-TSn),
une nouvelle transmission de données est effectuée par le capteur (1) sous la forme d'un paquet de données dès qu'au moins la condition suivante est satisfaite :
atteindre une quantité prédéfinie d'horodatages (TS) collectés, en particulier comprimés, depuis la transmission de données précédente.

2. Procédé selon la revendication 1, **caractérisé en ce qu'**un trajet de communication tertiaire (6) est prévu entre le maître (3) et une tête de réseau (4).

3. Procédé selon la revendication 1 ou 2, **caractérisé en ce que** les horodatages (TS) sont transmis sous forme comprimée par le trajet de communication primaire (6).

4. Procédé selon l'une quelconque des revendications précédentes, **caractérisé en ce que** dans le cadre du modèle de corrélation, une valeur déterminée, un changement de valeur déterminé ou une différence de valeur déterminée de ladite au moins une grandeur physique ou physico-chimique ou du au moins un paramètre physique ou physico-chimique est défini(e) pour l'attribution d'un horodatage (TS), lors d'une détection de la valeur déterminée, du changement de valeur déterminé ou de la différence de valeur déterminée, un horodatage (TS) est déclenché par l'élément de mesure (9) et est stocké dans les moyens de stockage (7) du capteur (1).

5. Procédé selon l'une quelconque des revendications précédentes, **caractérisé en ce que** dans le cadre du modèle de corrélation (i), une position de compteur augmentant progressivement ou de manière incrémentielle et/ou une table de valeurs sont représentées au moyen d'horodatages (TS).

6. Procédé selon l'une quelconque des revendications précédentes, **caractérisé en ce que** les horodatages (TS) sont signés.

7. Procédé selon l'une quelconque des revendications précédentes, **caractérisé en ce que** sur la base des horodates (TS) arrivant au niveau du maître (3), un flux de données de mesure brutes (13) est généré en appliquant le module de corrélation, dans lequel il est prévu en particulier que le flux de données de mesure brutes (13) peut être évalué sans discontinuité temporelle dans la suite du traitement de données, mise à part la résolution de mesure du capteur (1), sur une base d'historique de temps.

8. Procédé selon l'une quelconque des revendications précédentes, **caractérisé en ce que** les unités de mesure élémentaires correspondent à la tension électrique ou à l'intensité de courant.

9. Procédé selon l'une quelconque des revendications précédentes, **caractérisé en ce que** la grandeur physique mesurée fait référence à un milieu d'alimentation, de préférence à l'eau, au courant, à un combustible ou à un gaz, d'un réseau d'alimentation, et/ou ledit ou l'un des paramètres physiques ou chimio-physiques mesurés est caractéristique de la quantité, de la qualité et/ou de la composition d'un fluide qui traverse le capteur (1) en question ou entre en contact avec celui-ci.

10. Procédé selon l'une quelconque des revendications précédentes, **caractérisé en ce que** l'unité de mesure élémentaire (9) génère un horodatage (TS) dès que l'unité de mesure élémentaire (9) reçoit une impulsion.

11. Procédé selon l'une quelconque des revendications précédentes, **caractérisé en ce que** les horodatages (TS) sont transmis sans redondance par le trajet de communication primaire (6).

12. Procédé selon l'une quelconque des revendications précédentes, **caractérisé en ce que** les horodatages (TS) dans les moyens de stockage (7) du capteur (1) ne sont supprimés que si la transmission des horodatages (TS) par le trajet de communication primaire (5) a été confirmée par le récepteur ou le maître (3).

13. Procédé selon l'une quelconque des revendications précédentes, **caractérisé en ce qu'**un procédé d'établissement de liaison est effectué dans le cadre de la transmission des horodatages (TS) par le trajet de communication primaire (5).

14. Procédé selon l'une quelconque des revendications précédentes, **caractérisé en ce qu'**après réception des paquets de données (PAj) ou des télégrammes de données (17i, 17i+n), ces derniers sont à nouveau assemblés selon une référence de séquence temporelle correspondante.

15. Procédé selon l'une quelconque des revendications précédentes, **caractérisé en ce que** le trajet de communication primaire filaire (5) est
un système de bus, de préférence un système de bus M, ou
un trajet de communication sur la base de RS232, PLC ou RS485.

16. Capteur (1) permettant de collecter des données en relation avec une consommation, un paramètre physique ou physico-chimique et/ou un état de fonctionnement dans le cadre d'un fonctionnement du capteur (1),
de préférence pour un compteur de consommation (10), dans lequel
le capteur (1) peut être relié à un maître par un trajet de communication primaire (5) d'un réseau d'alimentation comprenant le maître (3) pour la distribution d'un produit de consommation, dans lequel
le capteur (1) comporte un élément de mesure (9),
l'élément de mesure (9) du capteur (1) respectif est conçu pour fournir en tant que données de mesure brutes des unités de mesure élémentaires qui correspondent à au moins une grandeur physique ou physico-chimique ou à au moins un paramètre physique ou physico-chimique,
le capteur (1) comprend des moyens de stockage (7), dans lequel
le capteur (1) peut être relié au maître (3) par un trajet de communication primaire filaire (5), dans lequel
le capteur est conçu pour
- afin de définir la résolution de mesure du capteur (1), prédéfinir les conditions d'une génération d'horodatages (TS) en appliquant un modèle de corrélation,
- sur la base du modèle de corrélation, générer des horodatages (TS) de données de mesure brutes consécutives dans le capteur (1),
- envoyer les horodatages (TS) par le trajet de communication primaire, dans lequel
le capteur (1) est conçu pour
envoyer une pluralité d'horodatages (TS) sur le trajet de communication primaire (5) respectivement sous la forme d'un paquet de données (17i, 17i+1), un paquet de données comportant respectivement plusieurs horodatages (TS1-TSn),
effectuer une nouvelle transmission de données par le capteur (1) sous la forme d'un paquet de données dès qu'au moins la condition suivante est satisfaite :
atteindre une quantité prédéfinie d'horodatages (TS) collectés, en particulier comprimés, depuis la transmission de données précédente.

17. Réseau d'alimentation permettant de distribuer un milieu de consommation, comprenant
au moins un capteur local (1), de préférence une pluralité de capteurs locaux (1), pour générer et/ou retransmettre des données de mesure brutes en relation avec une consommation d'un milieu de consommation, un paramètre physique ou physico-chimique et/ou un état de fonctionnement d'un compteur de consommation (10),
un maître (3),
un trajet de communication primaire filaire (5) entre le capteur (1) respectif et le maître (3),
une tête de réseau (4) pour évaluer les données, et
un trajet de communication tertiaire (6) entre le maître (3) et la tête de réseau (4),
**caractérisé en ce qu'**un capteur (1) selon la revendication 16 est prévu comme capteur.
